# EUROPEAN PATENT APPLICATION

(11) **EP 2 143 882 A2**
(43) Date of publication of application: **13.01.2010**
(21) Application number: 09164867.5
(22) Date of filing: 08.07.2009
(51) Int. Cl.: F01D 5/18

(54) **Method and apparatus for providing film cooling to turbine components**

(30) Priority: 10.07.2008 US 170673
(71) Applicant: General Electric Company, Schenectady, NY 12345 (US)
(72) Inventor: Johns, David R., Simpsonville, SC 29681 (US); Brittingham, Robert A., Piedmont, SC 29673 (US); Phillips, James S., Easley, SC 29642 (US)
(74) Representative: Gray, Thomas

(57) **Abstract**

Methods and apparatuses for providing film cooling to one or more turbine components are provided. A cooling gas flow passage (200) provides a cooling gas to a turbine component (100) with the hot gas path of a turbine. The cooling gas flow passage (200) includes at least one feed aperture (202) operable to receive cooling gas from at least one cooling gas compartment (110) associated with a turbine component (100). The cooling gas flow passage (200) also includes at least one slot (206) with a converging portion (208) having a first opening (210) and a second opening (212), where the first opening (210) receives the cooling gas from the feed aperture (202), and the second opening (212) provides the cooling gas to at least a portion of an outer surface (102) of the turbine component (100).

## Description

### FIELD OF THE INVENTION

This invention relates generally to turbines and more specifically, to providing film cooling for turbines.

### BACKGROUND OF THE INVENTION

Turbines are utilized in a variety of aviation, industrial, and power generation applications. A turbine in general may be a rotating device that utilizes the action of a fluid, such as one or more hot gases, on it to produce work. In a conventional gas turbine, one or more pressurized, high temperature gases are typically utilized as the driving force of the gas turbine. A typical gas turbine includes three major components: a compressor, a combustor, and a turbine. In a typical operation of a gas turbine, the compressor compresses incoming air (or gas) to a high pressure and the combustor ignites fuel and mixes the fuel with the high pressure air to produce a high temperature, high velocity gas. The turbine then typically extracts energy from the high temperature, high velocity gas as one or more sets of rotating turbine blades are rotated by the gas.

To increase the power and/or efficiency of conventional gas turbines, the turbine operating temperatures are typically increased. The use of higher temperature gases in the conventional gas turbines generally yields higher energy potential. However, due to the high temperatures, various components of the gas turbine situated in or along the hot gas path often experience extremely high thermal loading. For example, the turbine blades utilized in the turbine may be damaged or degraded by continuous exposure to the hot gases. In some turbines, the temperature of the gases is higher than the melting points associated with the materials utilized in the construction of the turbine blades.

In conventional turbines that utilize higher operating temperatures, various internal and external cooling techniques may be employed in an effort to control and lower the temperature of the components of the turbine within or along the hot gas path, such as the turbine blades. In internal cooling, relatively cold air is typically bypassed from the compressor, other turbine component, or received from an external source and passed through one or more hollow passages inside a turbine component within the hot gas path. In external cooling (also referred to as film cooling), relatively cold air is typically received from the compressor, other turbine component or, an external source and passed or exited out through small holes at discrete locations along the surface of a turbine component within the hot gas path. This relatively cold air creates a protective blanket that protects the turbine component within the hot gas path from the high temperature environment.

In film cooling, the turbine components with the hot gas path are typically cooled by providing one or more internal passages within the turbine component (or by constructing the component to include one or more hollow compartments) and then creating one or more slots between the internal passages and the surface of the component that is exposed to the hot gas path. The relatively cold cooling air is typically provided to the internal passages or hollow compartments from where it is then exited through the one or more slots.

The relatively cold air exiting from the one or more slots is often at a much lower temperature than the hot gas that is driving the turbine. Thus, the introduction of the relatively cold air often directly leads to degradation in the efficiency of the turbine. Thus, it is desirable to increase the area of the film coverage over a turbine component within the hot gas path without increasing the amount of the relatively cold air entering the hot gas path. Various conventional metered apertures, used for regulating the amount of air through a slot, have been developed to increase the film coverage. However, these conventional metered apertures are typically angled against the surface of a slot, causing the relatively cool air to impinge on the back surface of the slot and leading to increased turbulence inside the slot. This turbulence makes it difficult for the relatively cold air to achieve uniformity before exiting into the hot gas path.

Accordingly, there is a need for improved cooling passages for providing cooling air or a cooling gas to a component of a turbine within a hot gas path. Additionally, there is a need for improved methods for providing cooling passages to facilitate more effective film cooling of turbine components subjected to a hot gas path.

### BRIEF DESCRIPTION OF THE INVENTION

According to one embodiment of the invention, there is disclosed a cooling gas flow passage for use with a turbine. The cooling gas flow passage includes at least one feed aperture operable to receive cooling gas from at least one cooling gas compartment associated with a turbine component. The cooling gas flow passage also includes at least one slot with a converging portion having a first opening and a second opening, where the first opening receives the cooling gas from the feed aperture, and the second opening provides the cooling gas to at least a portion of an outer surface of the turbine component.

According to another embodiment of the invention, there is disclosed a turbine component that is cooled. The turbine component includes an outer surface adapted to be exposed to a hot gas stream and an inner surface adapted to define at least a portion of a cooling gas compartment for receiving a cooling gas. At least one aperture is formed between the inner surface and the outer surface. The at least one aperture includes a feed aperture operable to receive the cooling gas from the cooling gas compartment. The at least one aperture further includes a slot having a converging portion and a diverging portion, where the converging portion receives the cooling gas from the feed aperture and provides at least a portion of the cooling gas to the diverging portion, and where the diverging portion receives the portion of cooling gas from the converging portion and provides the portion of cooling gas to the outer surface.

According to yet another embodiment of the invention, a method for providing a cooling gas to a turbine component exposed to a hot gas flow is disclosed. A feed is formed, where the feed aperture is operable to receive cooling gas from a cooling gas compartment associated with the turbine component. A slot is formed that includes a converging portion with a first opening and a second opening. The first opening receives the cooling gas from the feed aperture, and the second opening provides at least a portion of the cooling gas to an outer surface of the turbine component.

Other embodiments, aspects, features, and advantages of the invention will become apparent to those skilled in the art from the following detailed description, the accompanying drawings, and the appended claims.

### BRIEF DESCRIPTION OF THE DRAWINGS:

There follows a detailed description of embodiments of the invention by way of example only with reference to the accompanying drawings, in which:

Having thus described the invention in general terms, reference will now be made to the accompanying drawings, which are not necessarily drawn to scale, and wherein:
FIG. 1 is a perspective view of one example of a turbine component that may be utilized in association with various embodiments of the invention;
FIG. 2a is a cross-sectional view of a cooling gas passage, according to an illustrative embodiment of the invention;
FIG. 2b is a cross-sectional view of a cooling gas passage, according to an illustrative embodiment of the invention; and
FIG. 3 is a flowchart illustrating one example of a method for providing cooling gas to a turbine component, in accordance with an illustrative embodiment of the invention.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are methods and apparatuses for providing film cooling or cooling gas to turbine components. Cooling gas flow passages may be utilized in accordance with various embodiments of the invention in order to cool turbine components that are within a hot gas path. A turbine component may include one or more internal compartments, also referred to as cooling gas compartments that receive a cooling gas from a cooling gas source. Cooling gas flow passages may then facilitate film cooling of the turbine components. The cooling gas flow passages may include at least one feed aperture operable to receive cooling gas from the cooling gas compartments and at least one slot. The at least one slot may include a converging portion with a first opening and a second opening, wherein the first opening receives the cooling gas from the feed aperture, and wherein the second opening provides the cooling gas to at least a portion of an outer surface of a turbine component.

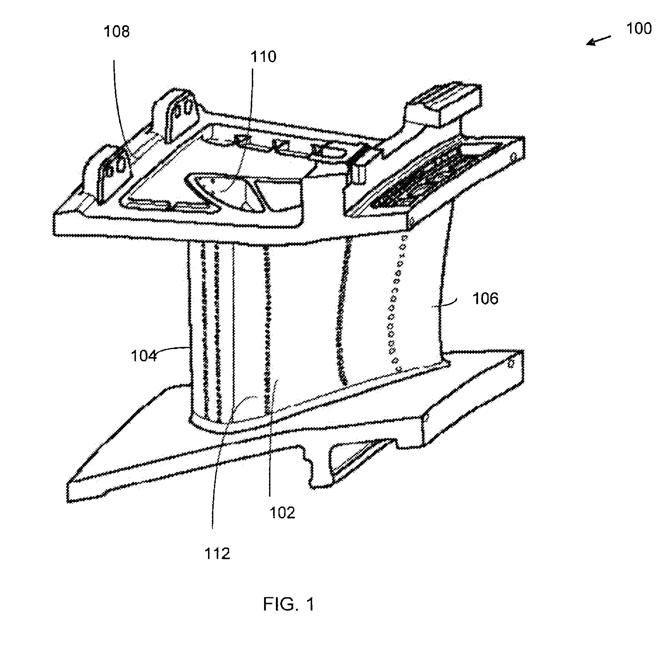

FIG. 1 is a perspective view of one example of a turbine component that may be utilized in association with various embodiments of the invention. FIG. 1 illustrates one example of a turbine blade 100 that may be utilized in a gas turbine engine (not shown). The gas turbine engine may include three major components: a compressor, a combustion chamber and a turbine (none shown). In operation, the compressor may compress incoming gas, such as air, to a relatively high pressure, and the combustor may ignite fuel and mix the fuel with the relatively high pressure gas to produce a relatively high temperature, relatively high velocity gas, which is referred to herein as "hot gas." The turbine may include a plurality of turbine blades, such as the turbine blade 100 that are mounted on a periphery of a rotor (not shown). The rotor may rotate due to the momentum of the hot gas coming out or exiting from the combustion chamber and impinging on the plurality of turbine blades 100.

FIG. 1 further illustrates an airfoil surface 102 of the turbine blade 100 which may be one of two surfaces of the turbine blade 100. The other surface (not shown) of the turbine blade 100 may be opposite to the airfoil surface 102. The airfoil surface 102 may also be referred to as a pressure surface or outer surface, and the other surface of the turbine blade 100 may also be referred to as a suction surface. For the purposes of this disclosure, the terms "airfoil surface," "pressure surface," and "outer surface" may be utilized interchangeably. During the operation of a gas turbine, relatively hot gas from the combustion chamber may contact the turbine blade 100 at a leading edge 104 and flow over both the pressure surface 102 and the suction surface (not shown) of the turbine blade 100. The relatively hot gas may then exit from a trailing edge 106. The stream of relatively hot gas from the combustor may be divided into two separate paths at the leading edge 104 of the turbine blade 100, after which the streams flow over either surfaces of the turbine blade 100 respectively. The stream that flows over the suction surface may travel a larger distance as compared to the stream that flows over the pressure surface 102. The velocity of one stream relative to another may depend on the difference in the length of between the surfaces. Thus, the stream that flows over the suction surface may flow at a higher velocity as compared to the stream that flows over the pressure surface 102. In one embodiment of the invention, it may be assumed according to Bernoulli's principle that the corresponding pressures on both the surfaces are inversely related, which may result in a higher pressure area on the pressure surface 102 as compared to a lower pressure area on the suction surface. This difference in pressure may result in a net force being applied on the turbine blade 100. Since the plurality of turbine blades 100 experience similar flow, these turbine blades 100 may be arranged circumferentially around the rotor in a manner such that the individual forces on the plurality of turbine blades 100 add up to give a net zero force and a net nonzero torque on the rotor. This torque may impart momentum to the rotor that facilitates the rotation of the rotor.

In various embodiments of the invention, the momentum extracted at the turbine stage may be determined based at least in part on the temperature of the hot gas. An increase in the operating temperature of the gas turbine may increase the power and efficiency of the gas turbine. However, the turbine blades 100 placed along the hot gas path may be vulnerable to the hot gas and may experience relatively high thermal loading as they are exposed to a continuous flow of relatively hot gas. For example, in certain embodiments of the invention, the relatively hot gas may have a temperature between approximately 850°C and approximately 1700°C, although other temperatures and/or temperature ranges may be utilized as desired in other embodiments of the invention. The temperature of the relatively hot gases may be above the melting point of the materials utilized to construct the turbine blades 100 and/or other turbine components within the hot gas path.

According to an aspect of the invention, a film cooling technique may be employed to bring down, reduce, or otherwise control the temperature of one or more turbine components, such as the turbine blades 100, within the hot gas path. The temperature of the turbine components may be controlled as desired in various embodiments of the invention. For example, the temperature of the turbine components within the hot gas path may be reduced or brought down below the melting point of the materials utilized to construct the turbine.

With additional reference to FIG. 1, an external film cooling mechanism is illustrated in which cooling gas, such as cooling air, may be provided to a turbine component. In some embodiments of the invention, a cooling gas (e.g., air) may be bypassed from the compressor of the turbine to the turbine stage at a relatively higher pressure and/or a relatively lower temperature than the relatively hot gas flowing through the turbine stage. This flow of cooling gas may be passed to a hollow compartment or a cooling gas compartment of a turbine component, such as turbine blade 100, where it is ejected or emitted via one of cooling gas flow passages made in the turbine component. The ejected cooling gas may form a thin film of relatively cool gas over a surface of the turbine component that is exposed to the relatively hot gas. In this regard, the ejecting cooling gas may assist in protecting the turbine component from the extreme temperatures of the relatively hot gas.

With additional reference to FIG. 1, an upper surface 108 may act as a base of the turbine blade 100 and may provide support to the pressure surface 102. A cooling gas compartment 110 may be seen on the upper surface 108. The turbine blade 100 may include any number of cooling gas compartments 110. Each cooling gas compartment 110 may be an internal hollow compartment situated or formed within the turbine blade 100. One or more cooling gas flow passages 112 may be formed between the cooling gas compartment 110 and one or more surfaces of the turbine blade 100 that are within the hot gas path. In this regard, relatively cool gas may be emitted from the cooling gas compartment 110 to the hot gas path in order to provide external film cooling for the turbine blade 100.

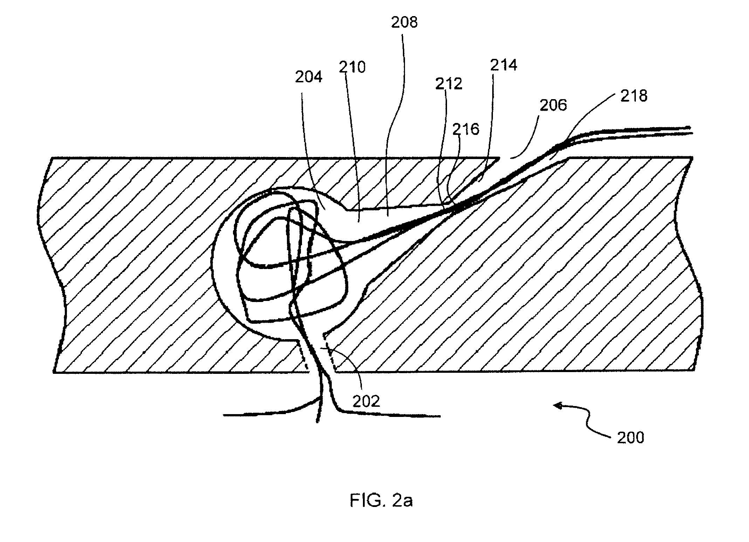

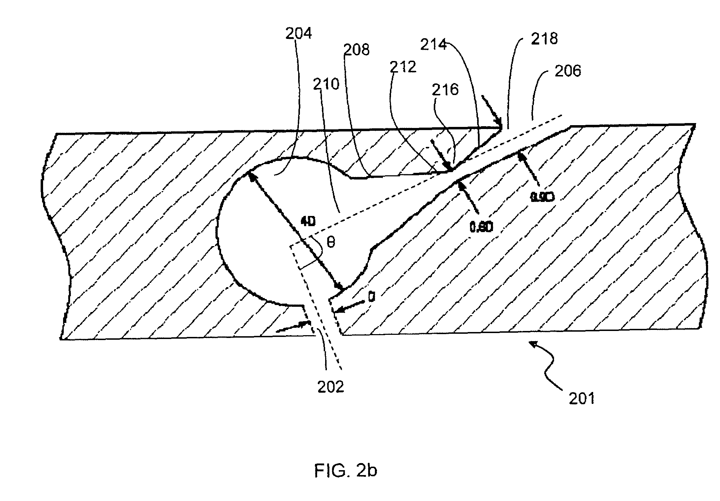

According to an aspect of the invention, the cooling gas compartment 110 may receive cooling gas at a relatively low temperature. For example, a gas pump (not shown in the figure) may withdraw cooling gas, such as cooling air directly from the compressor. Additionally, the cooling gas compartment 110 may facilitate the pressurization of the cooling gas so that the cooling gas has the necessary energy to be emitted through the one or more cooling gas passages and into the hot gas path. As explained in greater detail below with reference to FIGS. 2a and 2b, the cooling gas may be withdrawn from the cooling gas compartment 110 via one or more feed aperture. Each feed aperture may provide the cooling gas to an expansion cavity. After passing or flowing through the expansion cavity, the cooling gas may be provided to a slot that facilitates emitting the cooling gas into the hot gas path.

FIG. 2a is a cross-sectional view of one embodiment of a cooling gas flow passage 200, according to an illustrative embodiment of the invention. In various embodiments of the invention, any number of cooling gas flow passages, such as cooling gas flow passage 200, may be provided for a turbine component, such as the turbine blade 100 illustrated in FIG. 1. The cooling gas flow passage 200 may include a feed aperture 202, an expansion cavity 204, and a slot 206.

The feed aperture 202, may receive cooling gas from a cooling gas compartment, such as cooling gas compartment 110 illustrated in FIG. 1, and the feed aperture 202 may provide the cooling gas to the expansion cavity 204. The feed aperture 202 may be a mechanical device that meters and/or channelizes the flow of cooling gas that is received from the cooling gas compartment 110 and provided to the hot gas flow path via the cooling gas flow passage 200. A metering device may be a device with a minimum area that facilitates the control of the amount of gas flowing through it. Thus, the sum of all such minimum areas for all the feed apertures 202 provided for a turbine component may control the total amount of the cooling gas provided to the hot gas path for the turbine component.

According to an aspect of the invention, one or more cooling gas flow passages, such as passage 200, may facilitate the uniform spreading of the cooling gas provided to the hot gas path over one or more substantially entire surface of the turbine component, such as the pressure surface 102 illustrated in FIG. 1. The expansion cavity 204 may be provided to facilitate imparting a swirl to the cooling gas received from a feed aperture 202. The swirl may facilitate diffusion of the cooling gas inside or within the expansion cavity 204. In some embodiments of the invention, the cooling gas may be uniformly spread along the length of the expansion cavity 204. However, the uniform expansion may also be associated with the formation of secondary flows of the cooling gas within or inside the expansion cavity 204. Moreover, when the cooling gas impinges on the internal surface of the expansion cavity 204, turbulence may be generated and/or observed in the cooling gas flow. In certain embodiments of the invention, the expansion cavity may be discontinuous in order to reduce or minimize the turbulence in the cooling gas. However, in other embodiments of the invention, the expansion cavity 204 may be continuous in order to maintain and/or control the uniformity in the cooling gas.

In one embodiment of the invention, the cooling gas may be provided to a surface of a turbine component, such as turbine blade 100 from the expansion cavity 204 via one or more slots 206. If relatively turbulent gas is provided to the hot gas path, turbulence may be introduced in the boundary layer of the main gas flow leading to flow separation from an outer surface of a turbine component, such as the outer surface 102 illustrated in FIG. 1 for the turbine blade 100. Separation of flow from the outer surface 102 may degrade the aerodynamics of the flow and may lead to a decrease in the efficiency of the film cooling. Thus, according to an aspect of the invention, a converging portion 208 may be included in a slot 206 formed in the cooling gas flow passage 200. The converging portion 208 may include a first opening 210 and a second opening 212. The first opening 210 may receive the cooling gas from the feed aperture 202 and/or the expansion cavity 204. The second opening 212 may provide the received cooling gas to another portion, section, or component of the slot 206 or, alternatively, to at least a portion of an external or outer surface, such as the outer surface 102, of the turbine blade 100. The converging portion 208 may at least partially remove the turbulence in the cooling gas flowing through it. The converging portion 208 may also increase the speed of the cooling gas. In this regard, the converging portion 208 may at least partially remove one or more of the secondary flows from the cooling gas and facilitate the normalization of the cooling gas flow. The normalized cooling gas flow may have a relatively higher tendency to adhere to the outer surface 102 which in turn may increase the efficiency of the film cooling.

In one embodiment of the invention, the second opening 212 of the converging portion 208 may be located at the end of the cooling gas flow passage 200 and the cooling gas may be ejected into the hot gas path at the end of converging portion 208 only. However, in other embodiments of the invention, a diverging portion 214 may be provided in the cooling gas flow passage 200, and the diverging portion 214 may receive the cooling gas from the converging portion 208 and eject the cooling gas into the hot gas path. The diverging portion may include a first opening 216 and a second opening 218. The first opening 216 may receive the cooling gas from the second opening 212 of the converging portion 208, and the second opening 218 may provide the cooling gas to an outer surface 102 of a turbine component within the hot gas flow path.

The diverging portion 214 may facilitate the control of the velocity or speed of the cooling gas that is provided to the hot gas path. By controlling the velocity of the cooling gas as it is provided to the hot gas path, relatively greater film coverage over the outer surface 102 may be achieved. In one embodiment of the invention, the diverging portion 214 may reduce the velocity of the cooling gas received from the converging portion 208 to a velocity that is approximately equal to the velocity of the gas in the hot gas flow path. Thus, if the cooling gas received from the converging portion 208 is at a higher velocity as compared to the velocity of the gas within the hot gas flow path, then the diverging portion 214 may reduce the velocity of the cooling gas to a velocity that is approximately equal to that of the gas in the hot flow gas path. This reduction in the velocity of the cooling gas may facilitate a relatively more efficient film cooling by separating the hot gas in the hot gas flow path from the outer surface 102 of the turbine component.

FIG. 2b is a cross-sectional view of a cooling gas flow passage 201, according to an illustrative embodiment of the invention. The cooling gas passage 201 depicted in FIG. 2b may include similar components to the cooling gas flow passage 200 illustrated in FIG. 2a. Accordingly, like reference numerals may be utilized in describing the components of the two cooling gas flow passages 200, 201.

With reference to FIG. 2b, one example of dimensions for the various components of the cooling gas flow passage 201 is illustrated. The dimensions are provided with reference to a diameter D of the feed aperture 202. The cooling gas may enter a feed aperture 202 having a diameter D. Moreover, the feed aperture 202 may be provided at an angle θ relative to the direction of the slot 206. The angle θ may facilitate the provision of proper flow of the cooling gas into the expansion cavity 204. In one embodiment of the invention, the angle θ between the feed aperture 202 and the slot 206 may be between approximately 30° and approximately 180°. The cooling gas may thereafter enter the expansion cavity 204. The expansion cavity 204 may have a diameter that is relatively larger than that of the feed aperture 202. For example, the diameter of the expansion cavity 204 may be approximately two times to approximately eight times larger than that of the feed aperture 202. According to one embodiment of the invention, the diameter of the expansion cavity 204 may be approximately four times the diameter of the feed aperture 202, or approximately 4D. The relatively larger diameter of the expansion cavity 204 may facilitate the expansion and/or diffusion of the cooling gas received from the feed aperture 202.

The cooling gas may then pass through the converging portion 208 and optionally through the diverging portion 214 (if included in an embodiment of the slot 206). The diameter of the first opening of the first opening 210 of the converging portion 208 may be larger than that of the second opening 212 or exit opening of the converging portion 208. For example, the diameter of the first opening 210 of the converging portion 208 may be approximately two times to approximately four times the diameter of the feed aperture 202. Similarly, the diameters of the second opening 212 of the converging portion 208 may be approximately 0.5 times to approximately 1.5 times the diameters of the feed aperture 202. According to one embodiment of the invention, the diameter of the first opening 210 of the converging portion 208 may be approximately three times the diameter of the feed aperture 202, or 3D, and the diameter of the second opening 212 of the converging portion 208 may be approximately 0.6 times the diameter of the feed aperture 202, or 0.6D. The relatively smaller diameter of the second opening 212 as compared to the diameter of the first opening 210 may facilitate acceleration to the cooling gas and at least partially remove the turbulence from the cooling gas flow. In this regard, the converging portion 208 may facilitate the normalization of the cooling gas flow.

The cooling gas may further pass through a diverging portion 214. The diverging portion 214 may have a first opening 216 and a second opening 218. According to some embodiments of the invention, the diameter of the first opening 216 may be approximately equal to or substantially similar to that of the diameter of the second opening 212 of the converging portion 208. Additionally, the diameter of the second opening 218 of the diverging portion 214 may be greater than that of the first opening 216 of the diverging portion 214. For example, the diameter of the second opening 218 may be approximately two times to approximately four times that of the diameter of the feed aperture 202. In one embodiment of the invention, the diameter of the second opening 218 of the diverging portion 214 may be approximately 0.9 times that of the diameter of the feed aperture 202, or 0.9D. Given a diameter of the first opening 216 of approximately 0.6D, the diameter of the second opening 218 may be greater than that of the first opening 216. In this regard, the diverging portion 214 may facilitate the deceleration and/or the reduction of velocity of the cooling gas. In some embodiments, the velocity of the cooling gas may be reduced to approximately the velocity of the hot gases within the hot gas flow path.

According to various embodiments of the invention, varying lengths may be provided as desired for the converging portion 208 and the diverging portion 214. For example, the length of the converging portion 208 may be approximately two times to approximately five times that of the feed aperture 202, and the length of the diverging portion 214 may be approximately two times to approximately five times that of the feed aperture 202. According to one embodiment of the invention, the length of the converging portion 208 may be approximately equal to the length of the diverging portion 214.

Additionally, according to various embodiments of the invention, varying overall lengths for the slot 206 may be provided. For example, the length of the slot 206 may be approximately seven times to approximately ten times that of the feed aperture 202.

It will be apparent to a person skilled in the art that the values ranges given in the above embodiment are only for exemplary purposes and are not intended to limit or deviate the scope of the invention.

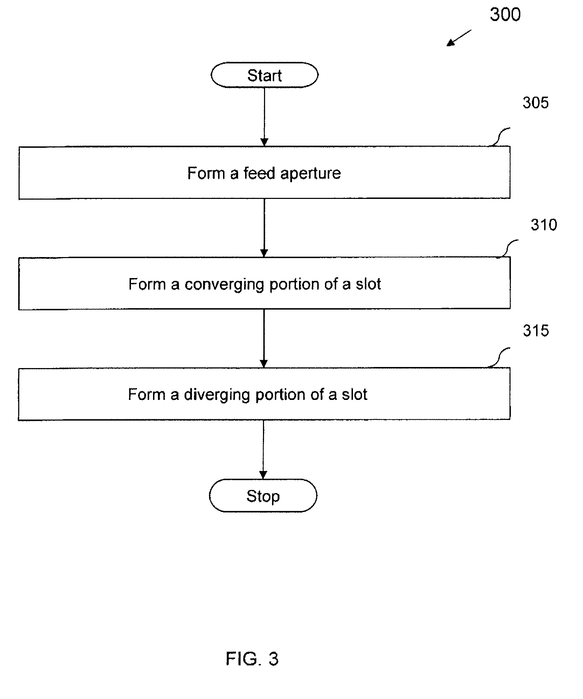

FIG. 3 is a flowchart illustrating one example of a method 300 for providing cooling gas to a turbine component, in accordance with an illustrative embodiment of the invention. It will be apparent to a person skilled in the art that the following steps may be mechanical in nature and may be carried out and/or performed by any machining technique and/or combination of machining techniques as desired in various embodiments of the invention.

Typically the machining techniques used in forming the various components of the slot 206 may include but are not limited to laser drilling, water jet and EDM (electrical discharge machining). The specific shape of the slots 206, the cooling gas flow passage 200 and the feed aperture 202 to be designed to spread gas flow or airflow over a greater surface area for effective film cooling may prove a major casting challenge owing to the complex geometry of the components involved. Processes such as EDM may use electrical discharge to make slots quickly and accurately, reach hard-to-access areas of part geometry and form the slots to a complex exit profile. Likewise, laser drilling may use laser pulses while water jet machining may use a stream of water for machining the various components of the slots 206.

The method 300 may begin at block 305. At block 305, a feed aperture, such as aperture 202, that is operable to receive cooling gas from a cooling gas compartment associated with a turbine component may be formed. The feed aperture 202 may be formed with a desired diameter that facilitates the metering and/or control of cooling gas flowing into and through the feed aperture 202. In operation, the cooling gas passing through the feed aperture 202 may enters an expansion cavity, such as cavity 204 where the cooling gas may be diffused. In certain embodiments of the invention, the expansion cavity may optionally be formed in the method 300. Following the formation of the feed aperture 202 at block 305, operations may proceed to block 310.

At block 310, a converging portion of a slot, such as converging portion 208 illustrated in FIG. 2a, may be formed and/or provided. In operation, cooling gas exiting the expansion cavity 204 and/or the feed aperture 202 may enter the converging portion 208, and the cooling gas may be accelerated and turbulence associated with the cooling gas may be reduced and/or minimized. Following the formation of the converging portion 208 at block 310, operations may continue at block 315.

At block 315, which may be optional in certain embodiments of the invention, a diverging portion of a slot, such as diverging portion 214 illustrated in FIG. 2a, may be formed and/or provided. In operation, the diverging portion 214 may facilitate the control of the velocity of the cooling gas that is provided to an outer surface of a turbine component within the hot gas path. The diverging portion 214 may reduce and/or minimize the velocity of the cooling gas that is received from a corresponding converging portion of the slot. The velocity of the cooling gas may be controlled by the diverging portion to be approximately equal to the velocity of the relatively hot gas in the hot gas path flow. Thus, in an optional embodiment of the invention, at step 315 the diverging portion 206 may be formed.

The method 300 may end following block 315.

The operations described in the method 300 of FIG. 3 do not necessarily have to be performed in the order set forth in FIG. 3, but instead may be performed in any suitable order. Additionally, in certain embodiments of the invention, more or less than all of the operations set forth in FIG. 3 may be performed.

Film cooling may be used to protect the turbine components of a turbine from the high temperature of the hot gas coming out of the combustion chamber. The mechanism of film cooling may involve bleeding cooling gas, such as cooling air, from the compressor stage to the components in the turbine. A controlled amount of relatively cool gas may be allowed to bleed in order to maintain the efficiency of the turbine. In order to maximize the film cooling area without increasing the amount of relatively cool gas expended, specially prepared slots with a converging portion may be used to achieve the desired film cooling. The converging slots may facilitate uniformity in the relatively cool gas bled out while simultaneously maintaining a clean flow free from secondary vortices and adhering to the surface of the turbine component. Additionally, the slots may include a diverging portion which facilitates the control of the velocity of the relatively cool gas that is provided to the surface of a turbine component.

Certain embodiments of the invention are applicable for any device, which is exposed to the hot gas flow and may be cooled from the backside of a surface that is exposed to the hot gases. Some examples of such devices include but are not limited to combustion chambers, rocket nozzles, etc. It will be apparent that any example taken provided in the foregoing specification is merely provided for explanation purposes and does not limit the scope of the invention by any means.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose embodiments of the invention, including the best mode, and also to enable any person skilled in the art to practice the invention, including making and using any devices or systems and performing any incorporated methods. The patentable scope of embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A cooling gas flow passage (200) for use with a turbine, the cooling gas flow passage (200) comprising:
at least one feed aperture (202) operable to receive cooling gas from at least one cooling gas compartment (110) associated with a turbine component (100); and
at least one slot (206) comprising a converging portion (208) with a first opening (210) and a second opening (212), wherein the first opening (210) receives the cooling gas from the feed aperture (202), and wherein the second opening (212) provides the cooling gas to at least a portion of an outer surface (102) of the turbine component (100).

2. The cooling gas flow passage (200) of claim 1, wherein an angle formed between the at least one feed aperture (202) and the at least one slot (206) is in the range of approximately 30 degrees to approximately 180 degrees.

3. The cooling gas flow passage (200) of claim 1 or 2, wherein the converging portion (208) facilitates normalizing a flow associated with the cooling gas received from the at least one feed aperture (202).

4. The cooling gas flow passage (200) of any of the preceding claims, wherein the at least one slot (206) further comprises:
a diverging portion (214) extending between the converging portion (208) and the outer surface (102) of the turbine component (100),
wherein the diverging portion (214) facilitates decreasing the velocity of the cooling gas provided to the outer surface of the turbine component (100).

5. The cooling gas flow passage (200) of claim 4, wherein a length of the converging portion (208) is approximately equal to a length of the diverging portion (214).

6. The cooling gas flow passage (200) of any of the preceding claims, further comprising:
an expansion cavity (204) provided between the at least one feed aperture (202) and the converging portion (208).

7. The cooling gas flow passage (200) of claim 5, wherein a diameter associated with the expansion cavity (204) is approximately two to approximately six times greater than a diameter associated with the at least one feed aperture (202).

8. The cooling gas flow passage (200) of any of the preceding claims, wherein a length of the at least one slot (206) is approximately seven times to approximately ten times a length of the at least one feed aperture (202).

9. A cooled turbine component (100), comprising:
an outer surface (102) adapted to be exposed to a hot gas stream;
an inner surface adapted to define at least a portion of a cooling gas compartment (110) for receiving a cooling gas; and
at least one aperture (200) formed between the inner surface and the outer surface, the at least one aperture (200) comprising:
a feed aperture (202) operable to receive the cooling gas from the cooling gas compartment (110); and
a slot (206) comprising a converging portion (208) and a diverging portion (214), wherein the converging portion (208) receives the cooling gas from the feed aperture (202) and provides at least a portion of the cooling gas to the diverging portion (214), and wherein the diverging portion (214) receives the portion of cooling gas from the converging portion (208) and provides the portion of cooling gas to the outer surface (102).

10. The cooled turbine component of claim 9, wherein the diverging portion facilitates decreasing the velocity of the portion of cooling gas provided to the outer surface.

11. A method (300) for providing cooling gas to a turbine component (100) exposed to a hot gas flow, the method comprising:
forming (305) a feed aperture (202) operable to receive cooling gas from a cooling gas compartment (110) associated with the turbine component (100); and
forming a slot (206) comprising a converging portion (208) with a first opening (210) and a second opening (212), wherein the first opening (210) receives the cooling gas from the feed aperture (202), and wherein the second opening (212) provides at least a portion of the cooling gas to an outer surface (102) of the turbine component (100).

12. The method of claim 11, wherein forming a slot comprises forming a slot at an angle with respect to the feed aperture, wherein the angle is between approximately 30 degrees and approximately 180 degrees.

13. The method of claim 11 or 12, wherein forming a slot further comprises forming a slot comprising a diverging portion between the converging portion and the outer surface of the turbine component,
wherein the diverging portion facilitates decreasing the velocity of the portion of cooling gas provided to the outer surface of the turbine component.

14. The method of any of claims 11 to 13, further comprising:
forming an expansion cavity between the feed aperture and the converging portion.
